# EUROPEAN PATENT APPLICATION

(11) **EP 4 434 327 A1**
(43) Date of publication of application: **25.09.2024**
(21) Application number: 23163154.0
(22) Date of filing: 21.03.2023
(51) Int. Cl.: A01G 27/00, A01G 31/02

(54) **AEROPONIC SYSTEM**

(71) Applicant: Freshape SA, 1020 Renens (CH)
(72) Inventor: LIU, Yuhang, 1020 Renens VD (CH)
(74) Representative: Schneiter, Sorin

(57) **Abstract**

The present invention concerns an aeroponic system particularly adapted for use in inhabited locations, including home use. The aeroponic system comprises a water supply (19, 20), an air storage tank (25) suitable to contain compressed air, a compressor (35) suitable to generate compressed air (36) to be stored in said air storage tank, one or more spraying device (51-53), a water distribution system (20) comprising one or more channels (11-14) for delivering water from said water supply to said spraying device, and an air distribution system (30) comprising one or more water channels (31-34) for delivering compressed air from said air storage tank to said one or more spraying device, wherein, at said spraying device, compressed air is used to spray droplets of water transported via said water distribution system into a space comprising one or more plants (60-63) grown in said aeroponic system, preferably said space comprising roots of said one or more plants.

## Description

### Technical Field

The present invention generally relates to the field of cultivation of plants in controlled environments, in particular in a soilless environment. More specifically, the invention relates to aeroponics.

### Background Art and Problems Solved by the Invention

Aeroponics is the cultivation of plants in which the roots of plants are not immersed in soil or aggregate medium. Instead, plants are cultivated in a closed or semi-closed environment and nutrients and water are supplied to the roots by spraying droplets of an aqueous solution of nutrients onto the roots. Generally, the roots are suspended in a casing that at least partially shields the roots from external light. Aeroponics is advantageous for several reasons. Since the environment is controlled, the plants are protected from environmental hazards. Yields are comparatively large. Furthermore, new locations or regions that would otherwise not be suitable for cultivating a given plant for climatic reasons become accessible when the infrastructure for the protected environment required for aeroponics is provided.

In order to enable optimal growth conditions, the timing, quantity (of water) and form of supplying water to the roots are essential. The water status on the roots and/or the plant is generally monitored so as to prevent lack of water and nutrients. The applied water ideally does not cover the entire root system of a plant, such that the root is preferably exposed to air even during watering and has access to oxygen as often as necessary. Excess water may result in fouling of roots or parts thereof.

Current aeroponic systems may be divided in high- and low-pressure aeroponic systems, wherein the former may be advantageous with respect to complexity, but the latter enable more precise control of water spraying. High-pressure systems are based on a mist generator, driven by high pressure water. These systems suffer from clogging of the spraying nozzle and therefore require a system for filtering air and water. There are also ultrasonic aeroponic systems, using either piezoelectric or compressed-air spray nozzles. Both systems are prone to deposition of material, especially nutrients from the aqueous solution resulting in nozzle clogging, noise generation, amongst other, thereby requiring high maintenance costs.

Furthermore, current aeroponic systems use water pumps to transport water from a water supply to the nozzle and for generating pressurized water that may be sprayed through the spraying nozzle. Such pumps are a source of noise. Since the spraying time depends on the water status of the cultivated plants, the timing of the noise generation cannot be controlled easily without compromising on optimal plant growth and yield. Due to the noise and also for other reasons, most of the current aeroponic systems are not suitable for use in buildings inhabited by which human beings. The invention seeks to provide a system allowing for efficient indoor culturing of plants in apartments and housing in which people are staying or living, such as at home or in the office. For example, the invention seeks to provide an aeroponic system that operates silently at selected times, such as during night time, and which can even be in bedrooms, for example. The invention is also based on the objective to exploit beneficial effects of cultivating plants in inhabited locations. Such beneficial effects include the generation of oxygen by plants and the natural air moistening. Furthermore, the presence of plants provides aesthetic benefits, mental benefits, and improves general well-being.

Further objectives and problems addressed by the present invention will become apparent from the description of the aspects and embodiments of the invention herein below.

### Summary of the Invention

The present inventors provide an aeroponic system that is suitable for use at home and that can be operated without generating noise are relevant times, such as during night time.

In an aspect, the invention provides an aeroponic system comprising: a water supply, one or more spraying device, a water distribution system comprising one or more channels for delivering water from said water supply to said spraying device, wherein, at said spraying device, droplets of water are sprayed into a space comprising one or more plants grown in said aeroponic system, preferably said space comprising roots of said one or more plants.

In an aspect, the invention provides an aeroponic system comprising: a water distribution system comprising one or more channels for delivering water from said water supply to said one or more spraying device, wherein said water distribution system comprises one or more channel for controlling and/or driving water flow from said water supply towards said spraying device by way of interactions including capillary forces.

In an aspect, the invention provides an aeroponic system comprising: a water supply, an air storage tank suitable to contain compressed air, one or more spraying device, a water distribution system comprising one or more channels for delivering water from said water supply to said spraying device, and, an air distribution system comprising one or more water channels for delivering compressed air from said air storage tank to said one or more spraying device, wherein, at said spraying device, compressed air is used to spray droplets of water transported via said water distribution system into a space comprising one or more plants grown in said aeroponic system, preferably said space comprising roots of said one or more plants.

In an aspect, the invention provides an aeroponic system comprising: a water distribution system comprising one or more channels for delivering water from said water supply to said spraying device, and, an air distribution system comprising one or more water channels for delivering compressed air from an air storage tank to said one or more spraying device, wherein, at said spraying device, compressed air is used to spray droplets of water transported via said water distribution system into a space comprising one or more plants grown in said aeroponic system, preferably said space comprising roots of said one or more plants.

In an aspect, the invention provides an aeroponic system comprising: a water supply, an air storage tank, suitable to contain compressed air, a compressor suitable to generate compressed air to be stored in said air storage tank, one or more spraying device, a water distribution system comprising one or more channels for delivering water from said water supply to said spraying device, and, an air distribution system comprising one or more water channels for delivering compressed air from said air storage tank to said one or more spraying device, wherein, at said spraying device, compressed air is used to spray droplets of water transported via said water distribution system into a space comprising one or more plants grown in said aeroponic system, preferably said space comprising roots of said one or more plants.

In an aspect, the invention provides a method of operating an aeroponic system comprising one or more motor driven or motorized component, said motor driven or motorized component providing at least part of the energy required for watering plants grown in said aeroponic system, wherein said method comprises watering said plants without running said one or more motor driven component.

In an aspect, the invention provides a method for cultivating plants, the method comprising operating and/or using the aeroponic system of the invention.

Further aspects and preferred embodiments of the invention are defined herein below and in the appended claims. Further features and advantages of the invention will become apparent to the skilled person from the description of the preferred embodiments given below.

### Brief Description of the Drawings

**Figures 1****,** **2** and **3** schematically illustrate aeroponic systems according to a first, second and third embodiment of the invention, respectively.
**Figure 4** is a perspective view of an embodiment of a spraying device of the invention, which may be used in the aeroponic system according to the invention.
**Figure 5** is a photograph showing droplets generated by the spraying device shown in Fig. 4.

Hereinafter, preferred embodiments of the invention are described, in order to illustrate the invention, without any intention to limit the scope of the present invention.

### Detailed Description of the Preferred Embodiments

The present invention relates to an aeroponic system, to methods of cultivating plants and to a spraying device for use in culturing plants and/or agriculture. In a preferred embodiment, the invention relates to an aeroponic system.

The aeroponic system is designed to operate comparatively silently and/or to generate noise, in particular the noise of motors, at defined times only. Thanks to these features, the aeroponic system is suitable for use in habitats that are occupied by humans and/or animals, such as privately inhabited apartments, houses, homes, offices and the like. In some embodiments, these features are obtained by using capillary force and/or gravity for water transport to at least some extent for the transport of water to spraying nozzles. In some embodiments, spraying is at least partially driven by compressed air that has been stored previously in an air storage tank, such that spraying can be conducted whenever required without running a motor, such that generation of noise during spraying is significantly reduced, and even reduced to a level that remains below levels that disturbs an average individual from sleeping in the room in which the aeroponic system is installed.

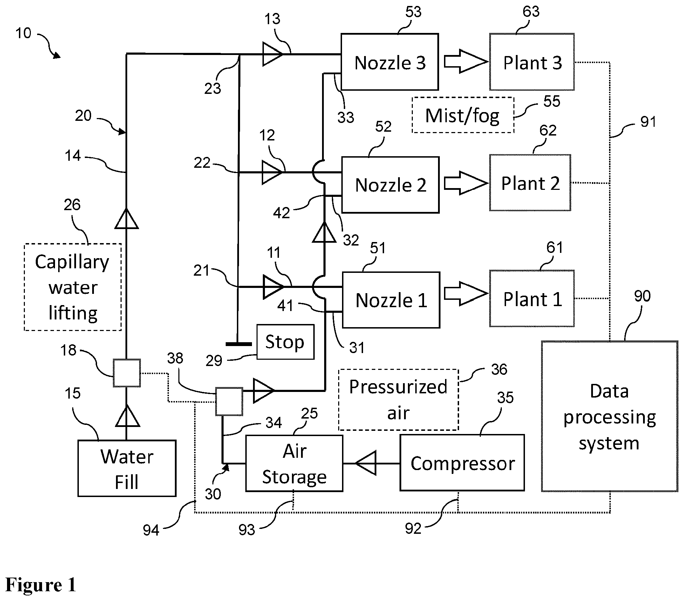

As shown in **Figure 1****,** the aeroponic system of the invention comprises one or more spraying devices and/or nozzles 51, 52, 53, which are provided to atomize water and preferably to direct the atomized water (most/fog) 55 towards one or more plants 60, 61, 62, 63, and more specifically to the roots of the one or more plants. The number of plants cultivated in the system of the invention is not relevant, but in the case of most cultivated plants, including vegetables, salad, spices, and so forth, there will generally be more than one individual unit plant be cultivated. Generally, in aeroponic systems, the roots are provided in a housing that separates the green parts of a cultivated plant from the roots. Generally, a separation wall comprising a hole is provided, with the green parts generally being on the side exposed to a light source and the roots on the side which is shielded from light.

Generally, a housing defining a space for the roots is provided. In some embodiments, the spraying devices may be provided to deliver atomized water generally into the space where one or more plant roots are located. Preferably, the spraying devices are positioned so as to generate atomized water in the space occupied by the roots of the plants, and to provide said atomized water to be preferably homogenously distributed in said space.

For the purpose of the present invention, the term "water" is generally used for referring to an aqueous solution comprising water and/or also added nutrients for the plant cultivated in the aeroponic system. The invention may, however, also be operated with water in general, for example soft water as available from a water network and/or supply as pre-installed in buildings.

In the aeroponic system, there may but need not be a correlation between the number of spraying devices and the number of individually and/or separately cultivated unit plants or plant roots. In some embodiments, one spraying device is provided for delivering atomized water to the root of one plant, as suggested by the scheme of Fig. 1. However, depending on the plant or on the constructional particularities of the aeroponic system, there may also be more or less than one spraying device per plant. Depending on the root size, for example, it is possible that there need to be a plurality of spraying devices for one individually or separately grown unit plant.

For the purpose of the present invention, the atomized water is preferably water provided in the form of droplets that are capable of remaining suspended in the air for a sufficiently long time so as to be able to travel the distance between the spraying device and the plant root. In an embodiment, the droplets of the water have a preferred size, size distribution and/or mean size. In a preferred embodiment, the atomized water comprises water having droplet sizes of 5-200 µm, preferably 10-150 µm, more preferably 25-100 µm and most preferably 20-80 µm.

The present inventor has observed that droplets as defined herein are suitable to enable optimal water and nutrient supply while avoiding oxygen deficiency at the surface of the root. In particular, the defined droplet sizes are suitable to avoid the generation of a continuous water film covering the root over an extended surface. Watering in accordance with the invention results in areas on the root surface that are free of a water film, such that ambient air is in contact with the root surface and optimal oxygen supply is warranted.

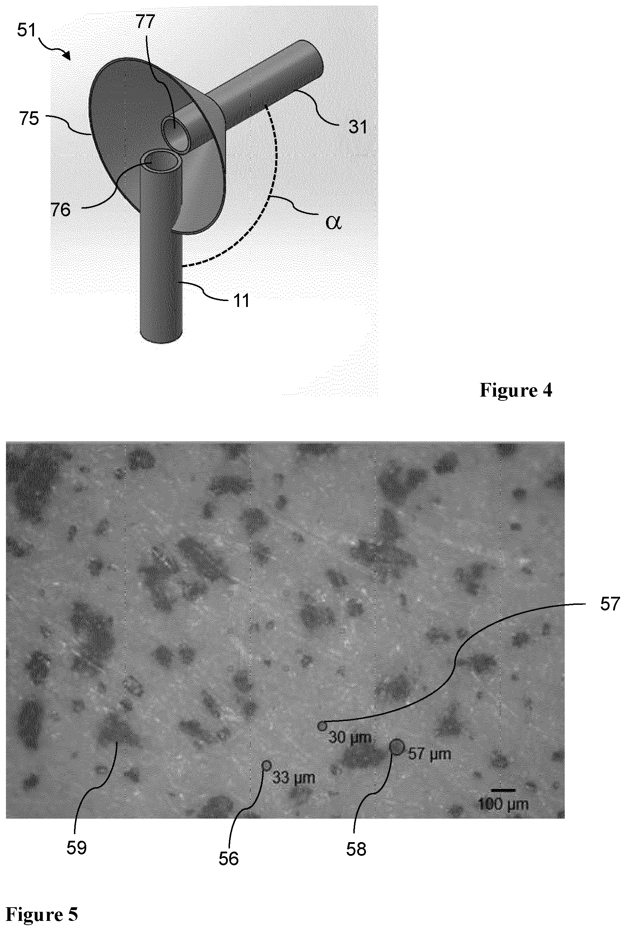

During operation, the one or more spraying device of the invention is preferably supplied with water and compressed and/or pressurized air. The functioning of the spraying device will be described elsewhere in this specification, in particular with reference to Fig. 4. Other structural components preferably provided for supplying the water and/or compressed air to a spraying device are described first.

In an embodiment, the system of the invention comprises a water distribution system 20 and an air distribution system 30.

The water distribution system is provided to supply water to one or more spraying device 51-53, and the air distribution system 30 is provided to supply pressurized air to one or more spraying device 51-53. The water is preferably supplied from a water supply 15 to a spraying device. The pressurized air is preferably provided from an air storage tank 25 to a spraying device.

The water distribution system 20 comprises one or more channels 11-14, in which water is transported, and the air distribution system 30 comprises one or more channels 31-34 in which said pressurized air is transported. The water and/or air channels may have any suitable shape and may be made from any suitable material, but may generally provided in the form of a tubular system defining, directing and/or confining the movement of water and/or air from the water supply to said one or more spraying device.

In preferred embodiments, the water supply 15 is provided in the form of a tank, e.g. a water tank. In other embodiments, the water supply comprises or consists essentially of a connection or connector to the water supply system that is part of the building in which the aeroponic system is installed. For example, the water supply may comprise a connector to a water tap.

In some embodiments, the aeroponic system of the invention is for home use. Preferably, the aeroponic system may be installed in any room and/or locations, including those lacking direct access to a water supply. For such embodiments, the water supply 15 is preferably a water tank.

In some embodiments, the aeroponic system is mobile and/or may be displaced. For example, the aeroponic system may be provided with wheels for displacing the system conveniently.

If the water supply 15 is a tank, the water is preferably provided in the form of an aqueous solution comprising nutrients, as mentioned elsewhere in this specification.

The air storage tank 25 is suitable to contain pressurized air 36. The aeroponic system preferably comprises a compressor 35 connected with the air storage tank, wherein the air compressor is provided for delivering air to the storage tank at least up to a given air pressure level in the tank, as schematically illustrated in Fig. 1 by a connection between the compressor and the air storage tank. The assembly of the compressor and the air storage tank may comprise one or more valves favoring the generation and the maintaining of pressured air in the air storage tank.

The water distribution system 20 preferably comprises a main channel 14 connected to the water supply 15, and one or more junctions 21, 22, 23, where water ducts 11-13 branch off from the main channel. Preferably, the ducts 21-23 are dedicated ducts, meaning that one duct feeds one spraying device only. Preferably, at a given junction 21, a dedicated water duct 11 is provided for specifically supplying water to an individual spraying device 51. Ducts 11-13 may also be referred to as branches or pipes.

It is noted here that the term "channel" is used generally for the main channel 14 and the term "duct" for the ducts 11-13 leading to the nozzles. For the purpose of the present invention, the two terms are equivalent and are not intended to automatically imply structural differences. In some embodiments, water transport by capillary forces may take place through a channel and in other embodiments through a duct or through both.

The air distribution system 30 preferably comprises a main channel 34 connected to the air storage tank 15 and one or more junctions 41, 42, where air ducts branch off from the main channel 34. Preferably, the ducts 31-33 are dedicated ducts, meaning that one duct feeds one spraying device only. Preferably, at a given junction 41, a dedicated air duct 31 is provided for specifically supplying compressed air to an individual spraying device 51. Ducts 11-13 may also be referred to as branches or pipes.

The water distribution system 20 preferably comprises one or more valves 18 for controlling water flow through the water distribution system 20. A valve 18 may be provided at the main branch 14, as shown in Fig. 1, and/or may be provided at one, several or each of the ducts 11-13 associated with and/or leading to an individual spraying device (not shown).

The air distribution system 30 preferably comprises one or more valves 38 for controlling air flow through the air distribution system 20. A valve 38 may be provided at the main channel 34, as shown in Fig. 1, and/or may be provided at one, several or each of the ducts 31-33 associated with and/or leading to an individual spraying device (not shown).

Junctions 21-23 of the water distribution system may comprise means for controlling flow of water to the corresponding branch that branches off at the junction. The means may simply be a change in diameter of the channel defined by the corresponding duct and/or the presence of another material having different contact angle θ with the aqueous solution. The means may also comprise a valve and/or a closure, including an adjustable closure, a junction valve, a gate, and the like. While 21 is shown as a junction, it can just leads to the last nozzle 51 along the direction of water flow in main channel 14. The junction leading to nozzle 51 and to nozzle 52 is junction 22. Fig. 1 showing stop 29 illustrates the fact that the system can be adapted in a modular way to a desired number of nozzles, so that a larger or smaller volume for root growth in the aeroponic system can be covered. The invention is therefore not limited to a particular number of nozzles. Preferably, the number of dedicated water ducts 11-13 during operation of a given number of nozzles is equal to the number of dedicated air ducts 31-33, which are both equal to the number of nozzles.

As discussed, the system as shown in Fig. 1 comprises a main water and air ducts 14, 34, junctions 21-23, 41-42 and branches 11-13 and 31-33, respectively. In another embodiment (not shown), an own (dedicated) and/or separate water channel leads directly from the water tank to a spraying device, such that junctions in the water distribution system may be absent or there may be less junctions.

A dedicated water duct 11 and a dedicated air duct 31 are leading to an individual spraying device 51. Preferably, at each spraying device, a water duct and an air duct meet and are fixed together, such that water and compressed air are or can be supplied to each individual spraying device.

In the device shown in Fig. 1, one of the driving forces and preferably the main driving force for the transport of water within the main channel 14 is capillary force, illustrated by the box 26. Capillary forces are capable of lifting water from the water supply, for example to a height of 0.3m or more, preferably 0.5m or more, even more preferably 0.7 m or more and most preferably 1.0 m or more above the surface of the water level in water supply. The indicated distances preferably apply to the vertical component of a water transport direction, and thus against the force of gravity. At the spraying devices, an additional force is provided by the compressed air, as described in more detail with respect to Fig. 4.

More generally, in this or other embodiments, capillary forces are used to control liquid flow in the in the water transport channels of the system of the invention. In some embodiments, capillary forces are used to lift water. In other embodiments, capillary forces are used to limit and/or slow down water transport taking place under the effect of gravity. The invention also encompasses that capillary forces are used for controlling water transport with or against gravity.

In particular, one or more of the following are preferably absent: a water pump, a motorized water pump, and electrically driven water pump. The mentioned water pumps would generate undesired noise during operation, and water transport within the channels and ducts is preferably propelled without a pump. This preferably applies to all embodiments, in particular those illustrated in Figs 1-3.

For obtaining the desired capillary forces, the radius of the lumen of a channel in which water is transported by capillary forces is preferably ≤0.01mm. Furthermore, the channels preferably comprise polar materials, such as glass, at least inside the lumen of the channel. For example, the channels may be made from glass tubes or porous glass materials. The water channels may also comprise fibrous materials, for example fabric materials like silk, cotton or wood. The water channels may also comprise particulate materials in order to obtain the desired capillarity. Exemplary particulate materials are silicon powders, fine-powder sand, or soil in general. Preferably, the particulate material is selected so as to exhibit a positive capillary effect when in contact with water (meaning absorbing of water, rather than repelling water). Preferably, the fibrous or particulate materials are present in the void of tubes to provide the water transport channels.

In a preferred embodiment, the system of the invention comprises a data processing entity 90, which controls the operation of the aeroponic system in an automated manner. The data processing entity preferably comprises signal lines 91 connected to sensors (not shown) suitable to sense the humidity at the roots and/or the water status of the plants. The signals received from the sensors enable the data processing entity to adequately spray water to the roots of the plants through nozzles 51-53. The system also comprises command lines, for example command line 92 for switching the compressor 35 on and/off, and/or command lines 94 for controlling the valves 18 and 38, in particular for opening and/or closing the valves, or possibly for controlling flow rate through the water distributing system and the air distributing system, respectively. Furthermore, the system 10 may comprise a line 93 for sending a signal related to the pressure in the air storage tank 25, allowing the data processing entity to determine said pressure. It is noted that lines 91-94 may be independently one from the other be cables or wireless communication lines. The data processing entity preferably comprises a computer, enabling operation in an automated manner. Furthermore, the data processing entity 90 is preferably configurable by a user of the system. The aeroponic system preferably comprises a user interface, allowing a user to determine parameters related to the operation of the system, such as periods where noise emission is to be avoided, and parameters related to the cultivated plants, determining the behaviour of watering as conducted by the system.

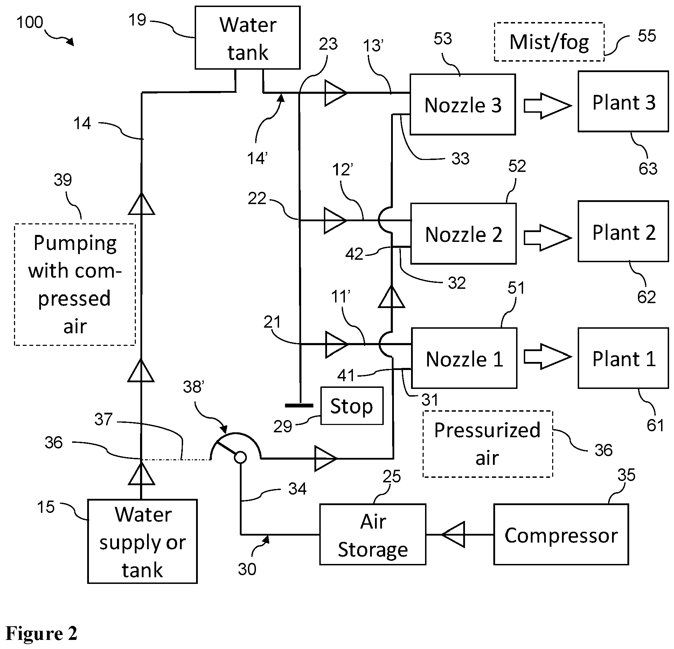

**Figure** 2 shows an aeroponic system 100 that differs from the embodiment 10 shown in Fig. 1 in that system 100 comprises an air channel 37 for directing compressed air from said air storage tank 25 towards a water channel. In the embodiment shown, the air channel 37 preferably connects to the main water channel 14. The air distribution system 30 preferably comprises an adjustable and/or controllable valve 37, that is suitable to direct air from the air tank through the air channel 37 into the water channel 14. The valve 37 may be inserted in the main air channel 34 as shown, for controlling air flow to the dedicated air ducts 31-33 on the one side and to the air channel 37 on the other side.

Furthermore, the system 100 comprises a secondary water supply in the form of a water tank 19, which contains water having a higher elevation energy than the water of the water supply 15. Preferably, the water tank 19 is located at a position above the water supply 15, preferably at least vertically displaced with respect to the water supply 15. In the system 100, the pressurized air inserted into main channel 14 by air channel 37 will provide force to lift water from the water supply 15 to the water tank 19.

The water lifting force provided by the air inserted at junction 36 preferably includes the pressure of the air and optionally also the air's density and gravitational force that are lower than that of water, pulling the air upwards and thereby pushing the water in the channel 14 towards the water tank 19.

Water channels 14', including dedicated ducts 11', 12', 13', are downstream the water tank 19 for delivering water to the spraying devices 51-53. Downstream tank 19, water transport is preferably controlled by gravitational forces, preferably in combination with capillary forces. In the ducts 11'-13', the capillary forces are preferably used to adjust and/or reduce water flow rather than propelling the water flow, whereas gravitational force acting on water is used to drive the water transport.

It is noted that the system as shown in Fig. 1 may also be provided with water transport propelled by compressed air, for example as described with respect to Fig. 2. In an embodiment, the system of Fig. 1 may be complemented with the air channel 37 and the valve 38, but may be lacking the water tank 19, for example. Independently, features shown in the system 10 may be present in the system 100, for example the one or more flow control valve 18.

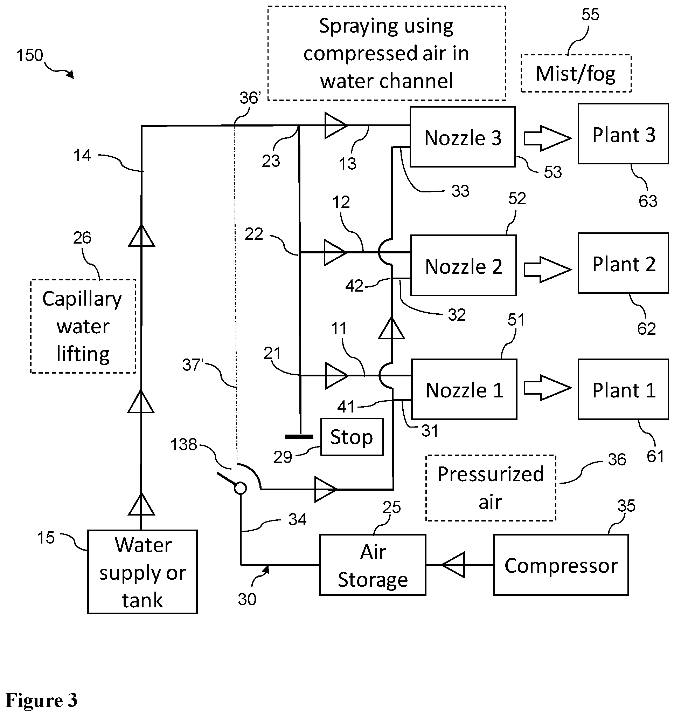

The aeroponic systems 100 and 150 shown in Figs 2 and 3, respectively, are preferably also operated by a data processing entity 90, although the same is not specifically shown again in Figs 2-3.

**Figure 3** shows a third aeroponic system 150, comprising an air channel 37' that branches off from valve 138 and leads into the water channel 14 at junction 36'. The latter junction is provided more downstream compared to junction 36 in the embodiment shown in Fig. 2. In this embodiment, water is first lifted by capillary forces 26, but at some distance from the tank 15, the pressurized air is used to drive the transport of the water for the remaining distance and up to the nozzles. The second part of the transport is based on the Bernoulli's principle.

In an embodiment, in said water distribution system, capillary forces are used to transport water over a first distance of the overall distance to the nozzle, and one or both selected from pressurized air and/or gravity are used to transport water over a second distance of the overall distance to the nozzle. In accordance with this embodiment the "first distance" and "second distance" are parts of the overall distance and together preferably do but need not make-up said overall distance. Furthermore, the "first distance" may be downstream or upstream said "second distance", so that the terms "first" and "second" in this context need not but may imply the order in a direction from upstream (near the water supply 15) to downstream (towards the nozzles).

**Figure 4** shows a spraying device 51, which may also be referred to as a spraying nozzle or simply a nozzle. The nozzle 51 comprises the terminal portions of a dedicated water duct 11 and of an air duct 31. The nozzle comprises an opening 76 of the water duct and the opening 77 of the air duct. Water exits duct 11 through opening 76 and pressurized air exits duct 31 through opening 77. The openings 76, 77 are in proximity and provided at a relative position enabling the generation of an air current at the opening 76, which air current preferably blows over the opening 76. In the embodiment shown, the terminal portions of ducts 11 and 31 are at an angle α of about 90° one with respect to the other, so that the direction of the air current generated at air outlet 77 is substantially perpendicular to the terminal portion of duct 11 and/or to the water outlet opening 76. Other angles α, preferably within the range of ≥ 20° and ≤ 160°, preferable in the range of 30-140°, more preferably 40-130° and most preferably 75-105° are encompassed by the invention.

The flow of air at the water outlet 76 creates a local depression or vacuum that exerts a draw on the water in duct 11, thereby pulling the water further out of duct 11, if applicable also overcoming capillary forces at the outlet. Furthermore, the air flow generates droplets of the water at outlet 76 and propels the droplets in the direction to some extent defined by the orientation of the terminal portion of duct 31.

Together with the capillary forces mentioned elsewhere in this specification, the flow of compressed air at and/or over the outlet 76 of the water duct 11 is sufficient to drive water flow from the water supply 15 to the spraying device, to atomize the water at the outlet and to direct the atomized water in a desired direction, as determined by the air flow and/or the water directing entity 45.

In a preferred embodiment, the spraying device comprised an atomized water directing entity 45, which may also be referred to as orientation regulator, provided to determine a direction and/or to limit a spatial spread of atomized water produced at said spraying device. The water directing unit 45 preferably comprises a funnel or a cone-shaped structure. The shape of the water directing entity is adapted to limit lateral spread and to direct the flow of water droplets generated by the nozzle.

In a preferred embodiment and/or of the spraying device of the invention, compressed air is used to spray droplets of water transported via said water distribution system towards one or more plants grown in said aeroponic system, in particular towards the root of said plant. Preferably, the compressed air is used at the spraying device.

The present inventor made the surprising observation that the nozzle as disclosed in Fig. 4 can generate droplets having the above indicated sizes. **Figure 5** shows water droplets generated by the nozzle 51. The size of some individual droplets is indicated to be 30 µm (ref. no. 57), 33 µm (ref. no. 56) and 57 µm (ref. no. 58). One can see also smaller droplets are present in the image. The larger droplets 59 having irregular shape are a combination of droplets that have fused on the surface where the photograph is taken. Fig. 5 shows that the concept of the nozzle as illustrated in Fig. 5 is suitable for generating fog and/or mist that is suitable to water roots of plants in an aeroponic system.

The operation of the aeroponic system according to the invention is illustrated with reference to the method of the invention. One concept of the invention is to be able to operate the system most of the time without running a motor or pump as disclosed elsewhere. This does not necessarily mean that the system does not contain any motor driven entity. In the embodiment shown, the system comprises a compressor 35, which is generally driven by a motor, such as an electric motor, a combustion motor or another source of mechanical energy.

In accordance with the invention, the system comprises an energy storage part, here in the form of an air tank 25 for storing pressurised air. The compressor is can be run at selected and limited times during the 24 hours of a day for generating pressurized air. Once pressurized air is present in the air storage 25, the pressurized air can be used for watering roots regularly and/or at any time, in the absence of a motor that is switched on. In other words, roots can be watered without running the one or more motor driven components that may be present in the system.

In a preferred embodiment, comprising storing energy in the form of compressed air and using said compressed air when watering said plants. Said compressed air may be used for watering the plants. Optionally, other forces may be used for running the system and/or watering plants, in particular for driving water transport in the water distribution system. For example energy exploitable by gravity and/or capillary forces may be used for driving the water transport. Furthermore, yet other available sources may be exploited. Pressurized air and capillary forces are preferably used separately or in combination to drive and/or control the water flow to the nozzle and the atomization at the nozzle. More specifically, pressurized air may be injected into a water channel and/or is used at the nozzle whenever capillary and/or gravity forces are not sufficient to transport water all the way to the nozzle.

In an embodiment, the system is configured to run said one or more motor driven component at times of comparatively lower human presence at a place of installation of said aeroponic system and/or during scheduled times. Similarly, the method of the invention preferably comprises running the one or more motor driven component at said times of comparatively lower human presence and/or during scheduled time

For example, the motor driven component may be run during daytime and/or during night. Yet, the aeroponic system is preferably configured to water said plants at any time, for example in dependence of water requirements of said plants. It may be sufficient to switch on the compressor for 0.1-6 hours a day, preferably 0.2-4 hours/day, more preferably 0.5-2 hours a day.

For example, if the aeroponic system is deployed in a privately inhabited location or home, such as an apartment, for example in a living room or when in a bed room, the motor driven component, in particular compressor 35, is preferably run during the day time, for example during typical working hours or office hour, and/or during weekdays, when the inhabitants are generally absent. To make a specific example for an aeroponic system for home use, the compressor may be switched on at one or more times between 8:30 and 12:00 and between 13:30 and 18:00 during workdays.

On the other hand, if the aeroponic system is installed in an office, the motor driven component 35 may be run during night time, when the office is empty and personnel is at home.

Preferably, the system may be configured and/or programmed by the user so as to adjust the time when the motor driven components run, so as to minimize noise exposure to humans that stay in vicinity of the system.

In an embodiment, the method comprises watering roots and/or plants without and/or independently from running a motor driven component, such as a pump, compressor, and the like. This is preferably achieved by the use of energy that is stored (here: in the air tank 25) and that can be used with comparatively low noise emission.

It is noted that the nozzles 51-53 may produce some noise when atomizing water, but the noise level is substantially lower compared to the noise of a motor driven component, such as the compressor or a pump, and is preferably sufficiently low not to disturb human activities including the sleep of an average individual.

In summary, the present invention concerns an aeroponic system particularly adapted for use in inhabited locations, including home use. The aeroponic system preferably comprises an air compressor and an air storage tank for storing compressed air. The compressed air in the air tank may be used for silently driving the aeroponic system. Furthermore, the invention provides a nozzle having a novel design, based on the use of compressed air for forcing water out of a water duct and directing atomized water to the roots of plants cultivated in the system.

While certain of the preferred embodiments of the present invention have been described and specifically exemplified above, it is not intended that the invention be limited to such embodiments. Various modifications may be made thereto without departing from the scope and spirit of the present invention, as set forth in the following claims.

## Claims

1. An aeroponic system (10) comprising:
- a water supply (19, 20),
- an air storage tank (25), suitable to contain compressed air,
- a compressor (35) suitable to generate compressed air (36) to be stored in said air storage tank,
- one or more spraying device (51-53),
- a water distribution system (20) comprising one or more channels (11-14) for delivering water from said water supply to said spraying device, and,
- an air distribution system (30) comprising one or more water channels (31-34) for delivering compressed air from said air storage tank to said one or more spraying device,
wherein, at said spraying device, compressed air is used to spray droplets of water transported via said water distribution system into a space comprising one or more plants (60-63) grown in said aeroponic system, preferably said space comprising roots of said one or more plants.

2. The aeroponic system of claim 1, wherein each of said one or more spraying device (51-53) comprises a first outlet (76) provided for letting water exit a channel (11) of said water distribution system and a second outlet (77) provided for letting compressed air exit a channel (31) of said air distribution system.

3. The aeroponic system of claim 2, wherein said first and second outlets (76, 77) are provided to atomize water exiting said first outlet (76) and to blow it towards said one or more plants.

4. The aeroponic system of claim 2 or claim 3, wherein said second outlet (77) is provided to generate a negative pressure at said first outlet (76), so as to drive a transport of water out of said first outlet.

5. The aeroponic system of any one of the preceding claims, wherein said one or more spraying device (51-53) comprises an atomized water directing entity (75), provided to determine a direction and/or to limit a spatial spread of atomized water produced at said spraying device, wherein said water directing unit (75) preferably comprises a funnel- or a cone-shaped structure.

6. The aeroponic system of any one of the preceding claims, wherein said water distribution system (20) comprises one or more channels (11-14) suitable to lift and/or transport water by capillary forces in a direction from said water supply (20) and towards said one or more spraying device (51-53) and/or to a position that is at least 50 cm above said water supply (20), wherein preferably at least part of a transport way from said water supply to said one or more spraying device is powered by said capillary forces.

7. The aeroponic system of any one of the preceding claims, further comprising an air channel (37) for directing compressed air from said air storage tank (25) towards a water channel (14), said compressed air being suitable to propel water transport in said water channel.

8. The aeroponic system of any one of the preceding claims, comprising a water tank (19) provided at a first position, wherein said one or more spraying devices (51-53) are provided at one or more second positions, wherein said first position is above said one or more second positions, so as to enable water transport from said water tank to said spraying devices by one or more forces including gravity.

9. The aeroponic system of claim 8, comprising one or more water channels (11-13) for transporting water from said water tank (19) to said one or more spraying device (51-53), where said one or more water channels are configured to control water flow from said water tank to said one or more spraying device by forces including capillary forces, preferably wherein said one or more water channels are configured so as to generate capillary forces that limit water flow through an outlet opening (46) of said one or more spraying device.

10. The aeroponic system of any one of the preceding claims, which comprises a plurality of spraying devices (51-53) and wherein said water distribution system (20) comprises one or more branches (21-23), wherein, at a given branch (23), at least one channel (13) branches off for distributing water towards one of said plurality of spraying devices, wherein said air distribution system (30) comprising one or more branches (41, 42), wherein, at a given branch (41), at least one channel (31) branches off for distributing water towards one of said plurality of spraying devices.

11. The aeroponic system of any one of the preceding claims, which lacks a water pump for pumping water to said spraying devices during watering said plants.

12. An aeroponic system (10) suitable for installation in occupied spaces, said aeroponic system comprising one or more motor driven component (35), required for providing at least part of the energy required for watering one or more plants grown in the aeroponic system, wherein said aeroponic system is configured to be able to (i) run said one or more motor driven component and to (ii) water said plants through said spraying devices independently one from the other.

13. The aeroponic system (10) of claim 12, wherein said one or more motor driven component comprises said compressor (35), wherein said aeroponic system comprises an air storage tank (25) for storing compressed air, and wherein the aeroponic system is suitable to water said plants by using compressed air stored in said air storage tank.

14. The aeroponic system (10) of claim 12 or claim 13, which is configured to run said one or more motor driven component (35) at times of comparatively low human presence at a place of installation of said aeroponic system and/or during scheduled times, such as during daytime and/or during night, and wherein said aeroponic system is preferably configured to water said plants at any time, preferably in dependence of water requirements of said plants.

15. A method of operating an aeroponic system (10) comprising one or more motor driven component (35), said motor driven component providing at least part of the energy required for watering plants grown in said aeroponic system, wherein said method comprises watering said plants without running said one or more motor driven component.

16. The method of claim 15, comprising storing energy in the form of compressed air and using said compressed air when and/or for watering said plants, optionally in addition to energy exploitable by gravity and/or capillary forces.

17. A spraying device (51) for watering plants and preferably for spraying water on roots of plants in an aeroponic system, wherein said spraying device comprises a water delivery channel (11) comprising a water outlet (76) and a compressed air delivery channel (31) comprising an air outlet (77), wherein said water outlet and said air outlet are provided one in vicinity to the other so as to enable atomization of water flowing out of said water outlet in presence of a flow of compressed air out of said air outlet.

18. The spraying device of claim 18, further comprising an atomized water directing entity (75), provided to determine a direction and/or to limit a spatial spread of atomized water produced at said spraying device, wherein said water directing unit (45) preferably comprises a funnel or a cone-shaped structure.

19. An aeroponic system (10) comprising:
- a water supply (19, 20),
- an air storage tank (25), suitable to stock compressed air,
- a compressor (35) suitable generate compressed air (36) to be stored in said air storage tank,
- one or more spraying device (51-53),
- a water distribution system (20) comprising one or more channels (11-14) for delivering water from said water supply to said one or more spraying device, and,
- an air distribution system (30) comprising one or more channels (31-34) for delivering compressed air from said air storage tank to said one or more spraying device,
wherein said water distribution system comprises one or more channel (11-14) for controlling and/or driving water flow from said water supply towards said spraying device by way of forces including capillary forces.

20. The aeroponic system (10) of claim 19, wherein said water flow is controlled in the absence of a water pump provided for pumping said water.
